# EUROPEAN PATENT SPECIFICATION

(11) **EP 1 793 314 B1**
(45) Date of publication and mention of the grant of the patent: **17.02.2010**
(21) Application number: 06256168.3
(22) Date of filing: 01.12.2006
(51) Int. Cl.: G06F 13/16

(54) **Data transfer operations and buffer memories**
Datenübertragungsverfahren und Pufferspeicher
Opérations de transfert de données et mémoires-tampons

(30) Priority: 02.12.2005 US 741579 P
(43) Date of publication of application: 06.06.2007
(73) Proprietor: Dialogic Corporation, Montreal, QC H4M 2V9 (CA)
(72) Inventor: Rau, Frank, 74080 Heilbronn (DE)
(74) Representative: Walker, Stephen

(56) References cited:
- JP-A- 61 123 970
- US-A1- 5 987 578
- US-A1- 6 044 445
- US-B1- 6 708 233
- US-B1- 6 810 470

## Description

### BACKGROUND OF THE INVENTION

### 1. Field of the Invention

The subject disclosure relates to data transfer operations and buffer memories, and more particularly to an improved system for using buffer memories in connection with a shared bus.

### 2. Background of the Related Art

There are many applications where many different devices share one common resource to store and/or transmit data. A typical example is a common personal computer, which shares a Peripheral Component Interconnect (PCI) bus and a single block of main system memory among several components. If a device wants to get access to the shared resource or bus, the device arbitrates and waits for a grant before being allowed to transmit data. The arbitration and waiting typically decreases bandwidth and system performance.

Typical data transfer operations also include a certain amount of overhead, especially in address/data multiplexed environments. Typically the destination address has to be transmitted, and then the transmitted address is decoded to indicate which target device is selected, before the payload data is transmitted. For example, if there is one data-cycle every sixth clock and the other five cycles are address-cycles and decoding cycles, the bus bandwidth decreases by a factor of six. One solution is to have more than one data-cycle in a transaction, which is commonly called 'burst transaction'.

When there are shared and limited resources in heavily loaded systems, it is crucial to avoid wasting valuable bus bandwidth, otherwise the available bandwidth becomes insufficient to handle all the requests. Thus, designers endeavour to transmit in burst transactions as often as possible and avoid breaking transmission-requests below a certain threshold of data words into two or more separate transactions.

As commonly known, first-in/first-out (FIFO) memories are widely used in the area of digital design. Most common applications are buffer memories or synchronizing memories between two clock domains. In a typical application, data is written into the FIFO memory through a write port and then read out in the same sequence via the read port.

In many applications, a plurality of devices like processing units or memories, FIFO and otherwise, are connected via one shared resource, typically a common bus such as a PCI bus. For performance reasons, it is critical to reduce the amount of overhead for every transaction. For temporal storage and/or clock domain crossings, buffer memories are commonly used. Usually, FIFO buffers are used to implement an in-order execution. Typically FIFO buffers contain a full flag and an empty flag. Further, a FIFO buffer may have one or more watermark signals, which are asserted when the amount of data stored in the buffer memory exceeds a certain threshold. Watermark signals can be programmable and/or used for raising a request for data transmission.

Some examples of efforts to improve upon the art are disclosed in U.S. Patent No. 5,991,304 issued November 23, 1999 to Abramson, U.S. Publication No. 2002/0116556 published on August 22, 2002 to Jones et al. and U.S. Publication No. 2004/0230715 published on November 18, 2004 to Huang.

In telephony, a data stream is a message including payload data, overhead information and error detecting/correcting information. Overhead information describes addressing information and protocol related information among other things. The error information allows for error checking. Payload data is the substantive portion of the data stream. For example, in a telephone message, the payload data represents the voice communication between the parties. An optimum length burst is a transaction containing a maximum amount of data words so that latency and bandwidth are within system specification. A full length burst is a transaction containing all of the payload data of a data stream.

U.S. Patent No. 6, 708,233 to Fuller et al. granted on March 16, 2004 discloses a method and apparatus for directly creating a buffer of contiguous payload data from an incoming variable-length data stream which utilizes a host controller for providing direct memory access (DMA) to a host computer memory.

In distributed environments, such as multi-processor systems, the individual software tasks often have to synchronize to each other. This is commonly done by sending messages or tokens from one task to another task. In response to the receipt of such a message or token, a software task performs specific actions. The synchronizing messages typically are short transactions but have to be transmitted with a very low latency because of a significant influence on system performance. In such a distributed system, the common approach of using only watermarks to determine requests of the buffer memory is not sufficient, regardless of whether the watermark is related to the priority of the request.

In more detail, the simple use of only watermarks inefficiently consumes system bandwidth. For example, consider a telephony system with an adapter card that has one single set of SDRAM memory and a plurality of individual devices that want to access this SDRAM memory. The system controller interfaces to these devices and communication is performed over a shared bus structure. The shared bus (as well as the SDRAM) has a fixed bandwidth that must be split between all the devices. Since there is some overhead due to a destination address transmitting in every transaction, decoding the target, arbitration and turnaround cycles, the system strives to make sure that the ratio of data to overhead is good. For example in a typical PCI bus, during one cycle arbitration, one cycle address transmission, one cycle decoding and one cycle turnaround, there is a four clock cycle overhead for each transmission. To transmit two data words in a transaction, six clock cycles are needed. As a result, the available bandwidth of the internal bus and the memory are decreased by 66% compared to the theoretical bandwidth.

### SUMMARY OF THE DISCLOSURE

It is an object of the subject technology to more efficiently use a shared bus. It is another object of the subject technology to transmit more data words within a transaction whenever possible. In one aspect, a system transmits 16 data words and, therefore, the overhead is only 20%, considering a four-cycle overhead as noted in the example above. In one embodiment, the system implements a software handshake mechanism, which sometimes is required to transmit short transactions quickly. Rather than set a watermark to a low value to prevent the data having to wait until additional other data is received, optimum bursts are transmitted.

In a further embodiment, the bandwidth coming from the individual devices is much lower than the bandwidth of the shared bus. If the received data stored in the FIFO memory is read out in a much higher rate than further data is received, the FIFO memory empties quickly. For short transactions with a bad overhead/data ratio on the shared bus and the memory as described above, the system delivers the payload data entirely whenever possible. Preferably, the system has a simple protocol and a corresponding special FIFO buffer to overcome these two problems, ensuring high performance operation. The system can multiplex many external devices by transmitting a small handshake message very quickly with a low latency and the 'real' data to process data coming from the individual devices with a very good overhead/data ratio.

In one aspect within a highly distributed and heavily loaded system, a more optimal method is disclosed to implement sufficient bandwidth and low latency for all transactions, without regard to whether the transactions are long or short. In one embodiment, the subject technology is directed to data being transmitted in burst-transactions over the bus, increasing the payload/overhead and payload/latency ratios and, as result, increasing the whole bus bandwidth to achieve improved performance.

In a further embodiment, the system uses watermarks and also ensures very efficient and low latency transactions under the following conditions: variable sized datastreams with embedded information about the message length; a heavily loaded system with a shared bus structure; and the bandwidth of the shared bus is higher than the bandwidth of the incoming datastream, which would have previously caused very short transactions on the shared bus, when only using empty-flags.

Typically, the common microprocessor interface has only single cycles or fixed length bursts (i.e., not really variable message sizes), or the bus structures do not have the embedded message length (*e.g.*, PCI) or the systems transmit messages in packets with a predetermined maximum amount of payload data (*e.g.,* Infiniband). In contrast, the subject technology is directed to a system with a variable length data-stream. Further, embodiments of the subject technology also work with payload sizes much greater than those that usually fit into a packet in common transfer protocols.

In one embodiment, the subject technology is directed to a method for delivering a datastream with payload data and overhead information. The method includes the steps of extracting payload length information from the overhead information, storing the payload data in a temporal storage buffer, determining an address of a current write location for a last data word of the payload data, copying the address into a first address register, marking the first address register as valid, and comparing the address of the first address register with a current read location of the temporal storage buffer. If the comparison between the entry of the first address register and the current read location of the temporal storage buffer is not equal, setting a request to indicate that a transaction is waiting in the temporal storage buffer.

Preferably, the overhead information is at a beginning of the datastream. In another aspect, the method further includes the steps of checking the datastream for integrity based upon error checking information embedded in the datastream, receiving the first data stream via a first bus and propagating the received information via a second bus different from the first bus. In one embodiment, the temporal storage buffer utilizes first-in-first-out functionality. In still another embodiment, the method further includes the steps of embedding the payload length information in the overhead information of the datastream, wherein the datastream including a plurality of data words, receiving the data stream, and transmitting the payload data of the temporal storage buffer upon grant of the request. The method may further includes the steps of clearing the request and marking the address register as invalid, if the comparison between the address of the first address register and the current read location of the temporal storage buffer is equal. Preferably, the address of the current write location is determined upon storing a last data word in the temporal storage buffer. In a further embodiment, the method includes the steps of setting a request when at least one address register of an array of a plurality of address registers is marked as valid, comparing the current read location with all active address registers, marking the corresponding entry as invalid if the comparison detects an equal entry and clearing the request when there are no active entries.

Another aspect of the subject technology not forming part of the invention as claimed, is directed to a method for reducing latency in a communication system including the steps of receiving a datastream via a first bus, wherein the datastream includes payload data and overhead information, storing at least the payload data of the datastream temporarily in a buffer memory, raising a request to transmit at least the payload data of the datastream via a second bus according to the overhead information and transmitting the payload data via the second bus upon a grant of the request. In one embodiment, the method further includes the steps of receiving a second datastream, wherein the second datastream includes payload data and overhead information and is a different size than the first datastream, storing at least a portion of the second datastream temporarily in the buffer memory, raising a request to transmit at least a portion of the second datastream via the second bus according to the respective overhead information and transmitting the portion of the second datastream via the second bus upon a grant of the request.

Preferably, the data stream further includes error detecting and error correcting information for maintaining the integrity of the payload data and the overhead information includes one or more dedicated control signals such that a priority flag is set to expedite transmission of the payload data. The transmission may be processed by a special port number with priority by using non-serial and/or serial buses.

In still another aspect, not forming part of the invention as claimed, the subject technology is directed to a system for efficiently using a shared bus including a motherboard having a memory for storing an instruction set and a processor in communication with the memory for executing the instruction set. The system also includes a controller card operatively connected to the motherboard for receiving a datastream. The datastream includes overhead data indicating an amount of payload data and the payload data. The controller card has a system controller for governing the operation of the controller card and temporal buffer circuitry operatively connected to the system controller for receiving the datastream. Based on the overhead data, the system controller signals the temporal buffer circuitry to receive all of the payload data for a corresponding transaction and raises a request to the motherboard to further transmit all of the payload data temporarily stored in the buffer memory via the shared bus.

Preferably, when all the payload data of the transaction is read out of the temporal buffer circuitry, the system controller releases the request for accessing the shared bus. If another complete transaction is stored in the temporal buffer circuitry, the request may stay active. If the payload data is of an excessive length, the system controller may transmit optimal length bursts. The system controller may further include memory storing an instruction set, a processor in communication with the memory for executing the instruction set, DMA circuitry, an arbiter, logic circuitry and interfacing circuitry.

It should be appreciated that the present invention can be implemented and utilized in numerous ways, including without limitation as a process, an apparatus, a system, a device, a method for applications now known and later developed or a computer readable medium. These and other unique features of the system disclosed herein will become more readily apparent from the following description and the accompanying drawings.

### BRIEF DESCRIPTION OF THE DRAWINGS

So that those having ordinary skill in the art to which the disclosed system appertains will more readily understand how to make and use the same, reference may be had to the drawings wherein:
Figure 1 schematically illustrates a system that efficiently handles communications in accordance with the subject technology.
Figure 2 schematically illustrates the system controller of the system of Figure 1.
Figure 3A illustrates a datastream over a time period.
Figure 3B illustrates exemplary overhead information of the datastream of Figure 3A.
Figure 4 is a schematic block diagram of a buffer memory in accordance with the system of Figure 2.
Figure 5 is a flowchart for a data stream being transmitted in accordance with the subject technology.

### DETAILED DESCRIPTION OF PREFERRED EMBODIMENTS

The present invention overcomes many of the problems associated with the prior art. The advantages, and other features of the system disclosed herein, will become more readily apparent to those having ordinary skill in the art from the following detailed description of certain preferred embodiments taken in conjunction with the drawings which set forth representative embodiments of the present invention and wherein like reference numerals identify similar structural elements whenever possible.

In brief overview, although FIFO memory could indicate a burst with a watermark-flag, problems arise in circumstances when the inputs in the FIFO memory are independent, variable length datastreams and the clock-rate of the write port is significantly slower than the clock-rate of the read port. Since the valid length of the incoming datastream could be anything between one single dataword and a predetermined maximum amount of datawords. The use of only watermark flags does not help when it is not guaranteed when the next transaction will enter the FIFO memory. A simple approach uses the empty flag of the FIFO memory to start a transaction on the shared bus. Thus, when the input clock is significantly slower than the bus clock, there would mostly be single cycles on the bus, resulting in a poor performance.

Alternatively, a method for transmitting data with optimised length bursts as well as maximum length bursts is desired. As a result, the payload/overhead and payload/latency ratios are increased. Preferably, the method includes the steps of embedding a payload length in overhead data of a data stream to be transmitted, the data stream including a plurality of datawords. The datastream is stored in a FIFO buffer to extract the payload length from the overhead data. Upon receipt of a last dataword of the datastream, an internal data_last control signal is set, an address of a current write location for the last dataword is determined and the address is copied into a first address register. Then, the system compares the current write location with the current read location. If the comparison between the current write location with the current read location is different, a request flag is set to indicate that a transaction is waiting in the FIFO buffer. If the comparison between the current write location with the current read location is the same, the request flag and the internal data_last control signal are cleared. Preferably, the overhead data is at the beginning of the datastream. The method is further operative to check the datastream for completeness based upon error checking data embedded in the datastream.

As a result, the amount of data can be known before data is transmitted over the shared bus (i. e., the right command can be chosen). The request-flag and the watermark-flag could simply be logically OR-ed together, indicating to the controlling agent that the FIFO buffer has data to transmit. Data is transmitted in a performance optimized way such as optimal length bursts or complete transactions in cases where the data is smaller than the optimal length. As would be appreciated by those of ordinary skill in the pertinent art upon review of the subject disclosure, the systems and methods work for any combinations of large and small transactions as well as for multiple small transactions in a row.

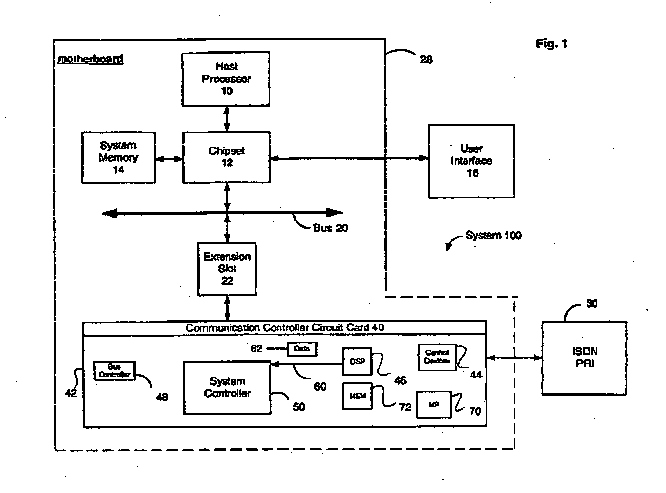

Referring to now Figure 1, a system for efficiently using a shared bus in accordance with the subject technology is referred to generally by the reference numeral 100. The system 100 includes a motherboard 28 having a host processing unit 10 connected to a chipset 12 and system memory 14. The host processing unit 10 may comprise, for example, an X86 compatible microprocessor. Of course, the host processing unit 10 may comprise another type of microprocessor suitable for executing an instruction set in accordance with the subject technology.

The chipset 12 has a host bridge/switch/hub (not shown) that couples the host processing unit 10, the system memory 14 and a user interface 16 to each other and to a bus 20. Generally, a "bus" means circuitry to transmit data between or among two or more devices. The bus 20 may include one or more communications media through which one or more signals may be propagated between such devices. The bus 20 preferably complies with the PCI Local Bus Specification, Revision 2.2, dated December 18, 1998 available from the PCI Special Interest Group, Portland, Oregon, U.S.A. Also, the bus 20 may include other types and configurations of bus systems without departing from the spirit or scope of the disclosed technology. The user interface system 16 includes a keyboard, pointing device, and display monitor that permits a user to input commands to, and monitor the operation of the system 100 as is well known to those of ordinary skill in the pertinent art.

Additionally, the chipset 12 may include an interrupt controller (not shown) that may be coupled, via one or more interrupt signal lines, to other components such as, *e.g.*, a communications controller card 40. Preferably, the communications controller card 40 is inserted into a circuit card bus extension slot 22. In one aspect, the communications controller card 40 acts as an interrupt controller that processes interrupts received via the interrupt signal lines from the other components in the system 100.

The communications controller card 40 includes operative circuitry 42 that is integral with the circuit card 40 as shown, or instead may be located alone or other structures, systems, and/or devices in connection with the system 100. For example, the operative circuitry may be directly on the motherboard 28 and coupled to the bus 20 for exchanging data and/or commands with other components in system 100. In one embodiment, the communication controller card 40 is coupled to and controls the operation of a set of integrated services digital network (ISDN) primary rate interfaces (PRI) 30. In another embodiment, the communications controller card 40 is also designed to be connected to interfaces other than primary rate ISDN such as Ethernet or Infiniband.

The operative circuitry 42 includes a set of ISDN PRI controlling devices 44, a set of digital signal processors 46 and a PCI bus controller 48 for transferring a datastream 62 across a bus 60 from the ISDN PRI 30 to a system controller 50. The PRI controlling devices 44 are responsible for sending and receiving data streams over the primary rate interface, which for example contain telephone calls or fax information. The PCI bus controller 48 is responsible for enabling communication with the host processor 10 and/or system memory 14. The bus 60 may be a parallel or serial bus and might transmit information either synchronously to an additional clock signal or embedded clock, or asynchronously with qualifying strobe signals.

The DSP 46 receives an incoming telephone call or datastream 62 from the ISDN PRI 30. Then the DSP 46 analyzes and demodulates the signal along with other well known processing as would be understood by those of ordinary skill in the pertinent art. The datastream 62 may be voice, fax or modem. Then the DSP 46 passes the processed 'payload data' to the system 100 via the system controller 50 and PCI controller 48. As a result, the signal is resent as an outgoing call on another port or mixed with other signals before sending, enabling such things as a telephone conference and the like. In addition, the operative circuitry 42 includes additional microprocessors 70 to control the operation of circuitry 42 and to enable communication with host software and memory 72 to temporarily store data.

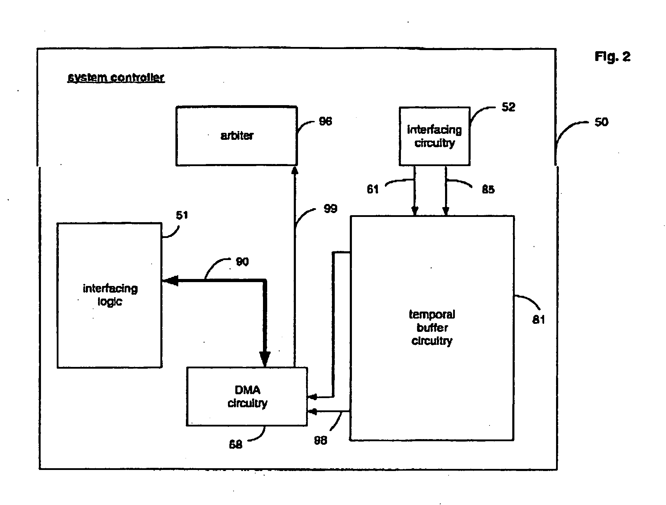

Referring now to Figure 2, the system controller 50 includes interfacing circuitry 52 for receiving the datastream 62 from the set of digital signal processors 46 via the bus 60. The interfacing circuitry 52 receives the datastream 62 and decodes the transfer protocol. The interfacing circuitry 52 may also synchronize the received data to an internal clock. In a further embodiment, the interfacing circuitry 52 also performs error checking.

The system controller 50 also includes interfacing logic 51 to one or more of all circuits and devices located in circuitry 42. A common bus 90 operatively interconnects the system controller 50 to other components such as the interfacing logic 51. The ownership of the bus 90 may be controlled by a bus arbiter 96, which is integrated with the system controller 50. Alternatively the common bus 90 may be integral with the circuitry 42 but outside the controlling circuitry 50. The bus 90 may be a multi-bit wide address/data multiplexed parallel synchronous bus such as a PCI subset compliant bus.

The system controller 50 also includes temporal buffer circuitry 81 for holding data passing therethrough. The temporal buffer circuitry 81 communicates with direct memory access (DMA) circuitry 58, which transfers previously stored data from the buffer circuitry 81 to the memory 72 and/or the PCI bus controller 48 via bus 90. The DMA circuitry 58 is designed to operate with a plurality of interfacing circuitries 52 and/or buffer circuitries 81.

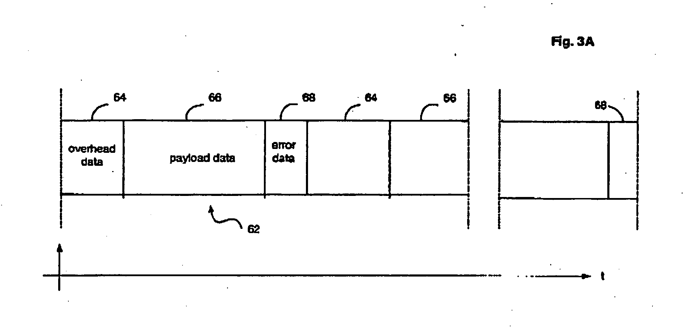

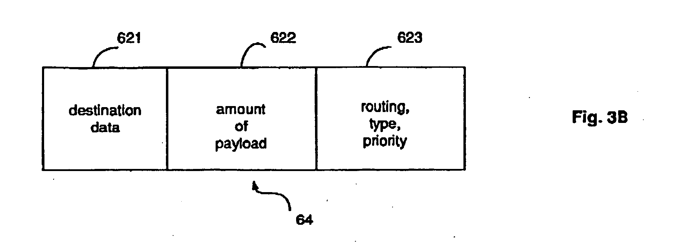

Referring now to Figure 3a, the datastream 62 has overhead information 64, payload data 66, and error detecting/correcting information 68 in each message as shown schematically in Figure 3. The payload data 66 can vary in size. The error detection/correction information 68 includes data such as, without limitation, one or more cyclic redundancy check (CRC) values. As a result, the amount of data can be known before data is transmitted over the shared bus (*i.e.,* the right command can be chosen). Preferably, the overhead information 64 is at a beginning of the datastream.

Referring to Figure 3B, the overhead information 64 is shown schematically. Preferably, the overhead information 64 includes sub-fields 621, 622 and 623. The protocol information sub-field 621 contains data that identifies the destination address and/or destination device of the transfer. The payload sub-field 622 contains data that identifies the amount of payload data following the overhead information and the routing sub-field 623 contains data that identifies further information like, for example, routing information, message type or priority of the message. Preferably, all the subfields 621, 622, 623 correspond to multi-byte values. For example, the protocol information subfield 621 may be 4 Bytes wide.

The interfacing circuitry 52 decodes the received overhead information 64 and stores the overhead information 64, the payload data 66 and the error detecting/ correcting information 68, or parts thereof, in the temporal buffer circuitry 81 via interface 61. Alternatively, the interfacing circuitry 52 may perform error correction operations by itself. The interface 61 may have a different bus width and or clock frequency than bus 60.

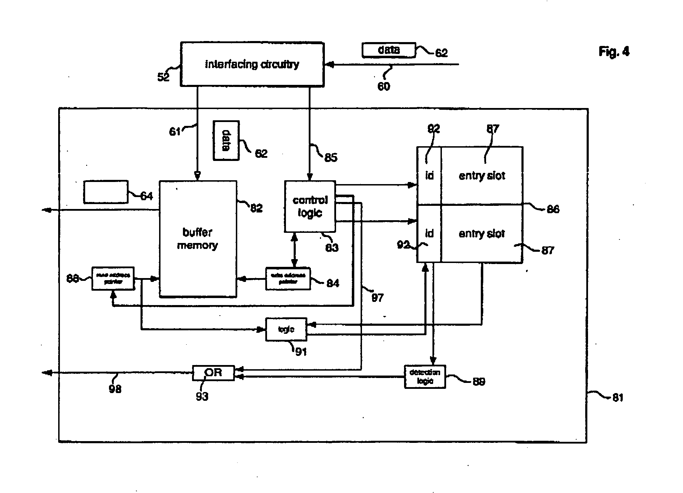

Referring now to Figures 2 and 4, the temporal buffer circuitry 81 is shown in more detail in Figure 4. The temporal buffer circuitry 81 includes one or more memory buffers 82 and buffer controlling logic 83. The buffer controlling logic 83 preferably establishes a FIFO functionality to the memory buffers 82. The interfacing circuitry 52 creates all or most of the necessary control signals to operate within the buffer controlling logic 83.

The buffer controlling logic 83 generates read address pointers 88 and write address pointers 84 to select a specific location of the memory buffers 82, to store data at or read data from. The buffer controlling logic 83 also generates full and empty flags or watermark signals along path 97 based on the fill level of the memory buffers 82. The signal on path 97 passes to an OR gate 93 to be asserted on path 98 to the DMA circuitry 58. The memory buffers 82 preferably are dual ported synchronous memory with independent read and write ports.

The DMA circuitry 58 transfers the previously stored data from the buffer memory 82 to memory 72 and/or the PCI bus controller 48 via bus 90. Depending on the received overhead information in subfields 622, the interfacing circuitry 52 signals the buffer controlling logic 83 about the reception of all the payload data 64 via a set of reception control signals along path 85. Additionally, depending on the subfield 623, interfacing circuitry 52 indicates to the buffer controlling logic 83 that the whole payload data 64 or a part thereof should be processed with a lower latency via the reception control signals set on path 85. The reception control signals consist of one or more logical signals, which either could be asserted or de-asserted. The reception control signals may be asserted and de-asserted synchronously to a writing operation to the buffer memory 82. The reception control signals may also be synchronous to interface 61.

In response to the assertion of one or more of the reception control signals, the controlling logic 83 transfers a copy of the current write pointer address 84 into a temporal storage array 86, which includes one or more entry slots 87. The temporal storage array 86 stores the pointer-addresses for later use in the comparisons. The system 100 may use only one of such entry or a plurality. In other words, the subject technology is not limited to FIFO buffer memories only. With multiple entries, the system 100 handles a normal memory implementation with random access. Thus, an 'entry slot' 87 is an expression for a single pointer-address storage. If more than one is needed, more than one can be implemented. Each of the stored pointer address entries marked as active is evaluated in a pointer address comparison and a request is activated when there is one or more active entries.

Additionally, the storage array 86 includes an active/inactive identifier 92 for each entry slot 87. The assertion of one or more of the reception control signals sets an inactive entry slot 92 to an active state. Even though the identifier 92 is already active, the associated entry slot 87 may be overwritten with a new address pointer.

Still referring to Figure 4, the temporal buffer circuitry 81 also includes logic circuitry 91. The logic circuitry 91 may be integral with the buffer controlling logic 83 or separate as shown. The logic circuitry 91 compares the value of the current read address pointer 88 with the values stored in each entry slot 87. If one of the values is identical, the logic circuitry 91 may set the corresponding entry to an inactive state. If there are no active entries, the DMA circuitry 58 will release the request to the bus arbiter 96 for transmitting data over bus 90 as further described below in paragraph [0048].

The buffer circuitry 81 also includes detection logic 89, which may also be integral with the buffer controlling logic 83 or separate in the temporal buffer circuitry 81 as shown in Figure 4. The detection logic 89 detects if the storage array 86 contains any active entries. If so, a transaction request signal is sent to the OR gate 93 to be asserted on path 98 to the DMA circuitry 58. This transaction request signal is also asserted, if one or more watermark signals is set in path 97 by the buffer controlling logic 83. As can be seen, the request-flag and the watermark-flag are preferably logically OR-ed together, indicating to the controlling agent that the FIFO buffer has data to transmit.

Referring again to Figure 2, based on the assertion of the transaction request signal on path 98, the DMA circuitry 58 asserts a request signal on path 99 in order to get access to the bus 90 from the bus arbiter 96. After receiving the request signal on path 99, the bus arbiter 96 determines whether or not to grant the DMA circuitry 58 access to bus 90. In response to access, the DMA circuitry 58 reads the available data for that request from the buffer memory 82 and transfers said data to the proper destination via bus 90. The bus arbiter 96 disables the grant to DMA circuitry 58 after a certain amount of data words transmitted, to ensure other devices have access to the shared bus 90. As a result of reading data from the buffer memory 82, the read address pointer 88 will change and may finally become identical with a value stored in an entry slot 87. In response, the stored value is marked as inactive. If the output of the OR gate 93 now becomes zero, which means that the buffer memory 82 now contains no active entries and, optionally, it's fill level is below a certain watermark, the DMA-circuitry 58 may release the request signal to the bus arbiter 96. Thus, the system 100 can use watermarks and maintain efficient transactions.

Generally, as can be seen, the system 100 has one or more interfacing circuitries, respectively receiving the datastream 62 with overhead information 64, payload data 66 and error data 68, wherein the overhead information 64 contains the amount of associated payload data 66. Based on this value of the overhead information 64, which indicates the amount of payload data 66, the interfacing circuitry 52 signals the temporal buffer circuitry 81 to receive all of the payload data 66 for the current transaction. In response, the temporal buffer circuitry 81 raises a request to the DMA circuitry 58 to further transmit the temporarily stored payload data 66 via the shared bus 90.

When all the payload data 66 of the transaction is read out of the buffer memory 82 of the temporal buffer circuitry 81, the temporal buffer circuitry 81 releases the request for accessing the shared bus 90. If in the meantime, another complete transaction is stored in the buffer memory 82, the request may stay active. Thus, there is a very low latency for any transaction, and the bandwidth of the shared bus 90 is optimized by only transmitting either complete messages or optimal length bursts.

Referring now to Figure 5, a flowchart for a method 102 illustrates data movement and flag setting in accordance with the subject technology. In short, as noted above, the datastream 62 is transmitted in bursts over the bus 20 to achieve high performance.

Initially, at step S1 of the method 102, the system 100 receives a datastream 62 via the ISDN PRI 30. The datastream 62 has control information and embedded payload length in the overhead data 64 and the payload data 66 is a plurality of datawords. The datastream 62 is stored in a FIFO buffer memory 82 At step S2, the length data is decoded from the datastream 62. In other words, the payload length is extracted and the number of datawords is entered into a counter (not shown).

Based on the length data, the system 100 determines the last dataword of the payload 66 at steps S3 and S4. In order to determine the last dataword, the system 100 determines if the current dataword being written into the FIFO buffer memory 82 is the last dataword of the datastream 62. If the current dataword is not the last, the system 100 decrements the counter and repeats through steps S3, S4 until the counter becomes zero, i.e., the last dataword is written.

Upon writing the last dataword of the datastream 62, the system 100 proceeds to step S5. At step S5, the system 100 raises the control signal using the detection logic 89. At step S6, the system 100 copies the write pointer into the storage array 86. The entry is also marked as active.

At step S7, the request flag is raised (*e.g.*, set to true or active) because there is an active entry indicating that a transaction is waiting in the FIFO buffer 82. The system 100 compares the current write location with the current read location. If the comparison between the current write location with the current read location is different, a request flag is properly set to indicate that a transaction is waiting in the FIFO buffer 82. In the alternative, if the comparison between the current write location with the current read location is the same, the request flag and the internal data_last control signal are cleared. To determine this comparison, the system 100 sets an internal data_last control signal and an address of a current write location for the last dataword is copied into a first address register.

At this point, step S8, the system 100 waits for a grant from the bus arbiter 96 to access the bus 90. At step S9, the system 100 repeatedly checks to see if access to the bus 90 has been granted. Upon receiving access, the system 100 proceeds to step S10, which is to read the datawords from the FIFO buffer 82 for transmission across the bus 90. At step S11, the system 100 tracks the progress of delivering the payload by continually comparing the read pointer with the last dataword to be written, i.e., the last pointer. At step S12, if the read pointer and the last pointer are equal, the system 100 proceeds to step S13. If not, the system 100 continues reading datawords and rechecking.

At step S13 of Figure 5, when the read pointer equals the last pointer, the payload has been delivered and the request and last flags can be released. Typically, the corresponding entry is marked as inactive as noted in Figure 5. However, at steps S14 and S15, the system 100 also continually checks for active entries such as another datastream 62 to transmit. If an active entry is present, the system 100 proceeds to step S7 to raise the request flag and repeat steps S7-S15 of the method 102. As a result, data is transmitted in a performance optimized way such as optimal length bursts or complete transactions in the case where the data is smaller than the optimal length.

For example, the system 100 is not limited in the maximum amount of payload data that can be transferred. Common transfer protocols usually transmit data in so called packets. The packets contain the payload data as well as all the overhead information. There's a maximum amount of payload data one can transfer within such a packet in prior art systems such as only 2048 bytes. In contrast, the system 100 may transmit any amount of payload depending on the length of a transmission-length field in the overhead information. Preferably, the system 100 supports up to 64kByte per transaction.

The method 102 is further operative to check the datastream for completeness based upon error checking data embedded in the datastream. For example, error checking is done by cyclic-redundancy-check (CRC). The system 100, as receiving device, calculates a CRC-Value for every dataword that is received. After all data words are received, the calculated CRC-Value must be identical to the CRC-value attached at the end of the transaction. If not, an error has occurred. In the system 100, the amount of payload data to be received is known in advance, so the next dataword after the last one can be defines as the CRC-checking value. If the system 100 detects an error, an error signal is raised.

In another embodiment, there is a minimum delay until a request for accessing the shared bus 90 might be granted by the bus arbiter 96. Preferably, it is guaranteed that when the transmission of a datastream 62 was initiated, that there will be no pause within that datastream 62 and each data word of the datastream 62 will be received within a specified maximum amount of time. Consequently, latency is reduced further by introducing a 'look-ahead' request. To accomplish the look-ahead request, the system 100 uses an additional entry in the temporal buffer circuitry 81. The additional entry or look-ahead request can be one or more bits. The look-ahead request is also fed into the OR-logic 93. The look-ahead request is set when a predefined dataword before the last dataword is received in the datastream 62. The predefined dataword can be at any location in the datastream 62. Due to the logical OR operation, setting the look-ahead request sets the request to transmit. In the meantime, all the remaining datawords will be received. The look-ahead request will be cleared in the normal way when the last dataword is read out of the buffer and then there are no other address registers marked as valid.

Even without the look-ahead request, it is also envisioned that the system 100 can raise the request before the last dataword is received because the length is known. For example, the system 100 can raise the request one or more bits before the last dataword is received. If the system 100 has a delay between raising the request and the processing of such request, this early raising of the request presents the request in a timely manner to improve latency and performance. As a result, the system 100 can properly run applications which guarantee that all remainig datawords will be received within a certain time delay. In other embodiments, the system 100 may raise the request before the last-2 datawords are received.

As would be appreciated by those of ordinary skill in the pertinent art upon review of the subject disclosure, the systems and methods work for any combinations of large and small transactions as well as for multiple small transactions in a row. For example, the system controller 50 transmits optimal length bursts if the payload data is of length that exceeds a threshold value that defines an excessive length. Further, it is also envisioned that the motherboard 28 can have a plurality of extension slots 22, each having a communications controller card 40. In still another embodiment, the communications controller card 40 has a plurality of temporal buffer circuits 81, each managed by a single DMA circuit 58.

The illustrated embodiments can be understood as providing exemplary features of varying detail of certain embodiments, and therefore, unless otherwise specified, features, components, modules, elements, and/or aspects of the illustrations can be otherwise combined, interconnected, sequenced, separated, interchanged, positioned, and/or rearranged without materially departing from the disclosed systems or methods. Additionally, the shapes and sizes of components are also exemplary and unless otherwise specified, can be altered without materially affecting or limiting the disclosed technology.

For example, in one embodiment, twenty communication channels are formed by twenty independent signal processors. A plurality of microprocessors, memory and a system controller (e.g., a programmable logic device) are operatively interconnected with the twenty channels. The system controller may directly access the shared bus and use a single engine to control all twenty signal processors in accordance with the methods disclosed herein. As would be appreciated by those of ordinary skill in the pertinent art, the system controller could be a one or more cards that is inserted in a stand alone computer, a networked server and the like.

The terms and expressions which have been employed herein are used as terms of description and not of limitation, and there is no intention, in the use of such terms and expressions, of excluding any equivalents of the features shown and described (or portions thereof), and it is recognized that various modifications are possible within the scope of the subject disclosure.

## Claims

1. A method for delivering a datastream (62) with payload data (66) and overhead information (64), the method comprising the steps of:
(a) extracting payload length information from the overhead information;
(b) storing at least the payload data in a temporal storage buffer (82),
(c) determining an address in the temporal storage buffer for a current write location for a last data word of the payload data;
**characterized in that** the method further comprises the steps of:
(d) copying the address into a first address register;
(e) marking the first address register as valid;
(f) comparing the address of the first address register with a current read location of the temporal storage buffer; and
(g) if the comparison between the entry of the first address register marked as valid and the current read location of the temporal storage buffer is not equal, setting a request to indicate that a transaction is waiting in the temporal storage buffer.

2. The method of claim 1, wherein the overhead information (64) is at a beginning of the datastream and further comprising the step of checking the datastream for integrity based upon error checking information embedded in the datastream.

3. The method of claim 1, further comprising the steps of:
receiving the first data stream via a first bus (20); and
propagating the received information via a second bus (90), which may be different from or the same as the first bus.

4. The method of claim 1, wherein the temporal storage buffer utilizes first-in-first-out functionality and buffer controlling logic (89) generates one or more watermark signals based on a fill level of the temporal storage buffer.

5. The method of claim 1, further comprising the steps of:
embedding the payload length information in the overhead information of the datastream, wherein the datastream includes a plurality of data words;
varying an amount of payload that is transmitted depending on a value of a transmission-length field in the overhead information;
receiving the datastream; and
transmitting the payload data of the temporal storage buffer upon grant of the request.

6. The method of claim 1, further comprising the steps of:
clearing the request and marking the address register as invalid, if the comparison between the address of the first address register and the current read location of the temporal storage buffer is equal; and
determining the address of the current write location upon storing a last data word in the temporal storage buffer.

7. The method of claim 1, further comprising the steps of:
setting a request when at least one address register of an array of a plurality of address registers is marked as valid;
comparing the current read location with all active address registers;
marking the corresponding entry as invalid if the comparison detects an equal entry; and
clearing the request when there are no active entries.

8. The method of claim 1, wherein a single controller (50) operates a plurality of temporal storage buffers to accomplish steps (a)-(g) for each temporal storage buffer.

## Patentansprüche

1. Ein Verfahren zum Abgeben eines Datenstroms (62) mit Nutzdaten (66) und Zusatzinformationen (64), wobei das Verfahren die folgenden Schritte beinhaltet:
(a) Extrahieren von Nutzlängeninformationen aus den Zusatzinformationen;
(b) Speichern mindestens der Nutzdaten in einem Zeitspeicherpuffer (82);
(c) Bestimmen einer Adresse in dem Zeitspeicherpuffer für eine gegenwärtige Schreibstelle für ein letztes Datenwort der Nutzdaten;
**dadurch gekennzeichnet, dass** das Verfahren ferner die folgenden Schritte beinhaltet:
(d) Kopieren der Adresse in ein erstes Adressregister;
(e) Markieren des ersten Adressregisters als gültig;
(f) Vergleichen der Adresse des ersten Adressregisters mit einer gegenwärtigen Lesestelle des Zeitspeicherpuffers und,
(g) falls der Vergleich zwischen dem Eingang des als gültig markierten ersten Adressregisters und der gegenwärtigen Lesestelle des Zeitspeicherpuffers nicht übereinstimmt, Festlegen einer Anforderung um anzuzeigen, dass eine Transaktion in dem Zeitspeicherpuffer wartet.

2. Verfahren gemäß Anspruch 1, wobei sich die Zusatzinformationen (64) an einem Anfang des Datenstroms befinden und wobei ferner der Schritt des Prüfens des Datenstroms auf Integrität basierend auf in dem Datenstrom eingebetteten Fehlerprüfinformationen beinhaltet ist.

3. Verfahren gemäß Anspruch 1, das ferner die folgenden Schritte beinhaltet:
Empfangen des ersten Datenstroms über einen ersten Bus (20) und
Ausbreiten der empfangenen Informationen über einen zweiten Bus (90), der sich von dem ersten Bus unterscheiden oder gleich sein kann.

4. Verfahren gemäß Anspruch 1, wobei der Zeitspeicherpuffer eine FIFO-Funktionalität benutzt und eine Puffersteuerungslogik (89) basierend auf einem Füllstand des Zeitspeicherpuffers ein oder mehrere Markierungssignale erzeugt.

5. Verfahren gemäß Anspruch 1, das ferner die folgenden Schritte beinhaltet:
Einbetten der Nutzlängeninformationen in die Zusatzinformationen des Datenstroms, wobei der Datenstrom eine Vielzahl von Datenwörtern umfasst;
Variieren einer Menge an Nutzinformationen, die übertragen wird, abhängig von einem Wert eines Übertragungslängenfelds in den Zusatzinformationen;
Empfangen des Datenstroms und
Übertragen der Nutzdaten des Zeitspeicherpuffers bei Bewilligung der Anforderung.

6. Verfahren gemäß Anspruch 1, das ferner die folgenden Schritte beinhaltet:
Auslösen der Anforderung und Markieren des Adressregisters als ungültig, falls der Vergleich zwischen der Adresse des ersten Adressregisters und der gegenwärtigen Lesestelle des Zeitspeicherpuffers übereinstimmt; und
Bestimmen der Adresse der gegenwärtigen Schreibstelle beim Speichern eines letzten Datenworts in dem Zeitspeicherpuffer.

7. Verfahren gemäß Anspruch 1, das ferner die folgenden Schritte beinhaltet:
Festlegen einer Anforderung, wenn mindestens ein Adressregister einer Matrix einer Vielzahl von Adressregistern als gültig markiert ist;
Vergleichen der gegenwärtigen Lesestelle mit allen aktiven Adressregistern;
Markieren des entsprechenden Eingangs als ungültig, falls der Vergleich einen übereinstimmenden Eingang erkennt; und
Auslösen der Anforderung, wenn keine aktiven Eingänge vorhanden sind.

8. Verfahren gemäß Anspruch 1, wobei eine Einzelsteuereinheit (50) eine Vielzahl von Zeitspeicherpuffern betreibt, um die Schritte (a)-(g) für jeden Zeitspeicherpuffer auszuführen.

## Revendications

1. Une méthode destinée à délivrer un flux de données (62) avec des données de charge utile (66) et des informations de service (64), la méthode comprenant les étapes consistant à :
(a) extraire des informations de longueur de données utiles des informations de service ;
(b) stocker au moins les données de charge utile dans un tampon de stockage temporel (82) ;
(c) déterminer une adresse dans le tampon de stockage temporel pour un emplacement d'écriture actuel pour un dernier mot de données des données de charge utile ;
**caractérisée en ce que** la méthode comprend en outre les étapes consistant à :
(d) copier l'adresse dans un premier registre d'adresse ;
(e) marquer le premier registre d'adresse comme valide ;
(f) comparer l'adresse du premier registre d'adresse avec un emplacement de lecture actuel du tampon de stockage temporel ; et
(g) si la comparaison entre l'entrée du premier registre d'adresse marqué comme valide et l'emplacement de lecture actuel du tampon de stockage temporel n'est pas égale, charger une demande pour indiquer qu'une transaction est en attente dans le tampon de stockage temporel.

2. La méthode de la revendication 1, dans laquelle les informations de service (64) se trouvent au niveau d'un début du flux de données et comprenant en outre l'étape consistant à vérifier l'intégrité du flux de données sur la base d'informations de vérification d'erreur intégrées dans le flux de données.

3. La méthode de la revendication 1, comprenant en outre les étapes consistant à :
recevoir le premier flux de données par le biais d'un premier bus (20) ; et
propager les informations reçues par le biais d'un deuxième bus (90), lequel peut être différent du premier bus ou identique à celui-ci.

4. La méthode de la revendication 1, dans laquelle le tampon de stockage temporel utilise une fonctionnalité premier entré premier sorti et une logique de contrôle de tampon (89) génère un ou plusieurs signaux de marque de niveau sur la base d'un niveau de remplissage du tampon de stockage temporel.

5. La méthode de la revendication 1, comprenant en outre les étapes consistant à :
intégrer les informations de longueur de données utiles dans les informations de service du flux de données, dans laquelle le flux de données inclut une pluralité de mots de données ;
faire varier une quantité de données utiles qui est transmise en fonction d'une valeur d'un champ de longueur de transmission dans les informations de service ;
recevoir le flux de données ; et
transmettre les données de charge utile du tampon de stockage temporel lors de l'octroi de la demande.

6. La méthode de la revendication 1, comprenant en outre les étapes consistant à :
annuler la demande et marquer le registre d'adresses comme invalide, si la comparaison entre l'adresse du premier registre d'adresses et l'emplacement de lecture actuel du tampon de stockage temporel est égale ; et
déterminer l'adresse de l'emplacement d'écriture actuel lors du stockage d'un dernier mot de données dans le tampon de stockage temporel.

7. La méthode de la revendication 1, comprenant en outre les étapes consistant à :
charger une demande lorsqu'au moins un registre d'adresses d'un réseau d'une pluralité de registres d'adresses est marqué comme valide ;
comparer l'emplacement de lecture actuel avec tous les registres d'adresses actifs ;
marquer l'entrée correspondante comme invalide si la comparaison détecte une entrée égale ; et
annuler la demande lorsqu'il n'y a pas d'entrée active.

8. La méthode de la revendication 1, dans laquelle un contrôleur unique (50) exploite une pluralité de tampons de stockage temporel pour accomplir les étapes (a) à (g) pour chaque tampon de stockage temporel.
